# EUROPEAN PATENT APPLICATION

(11) **EP 1 826 804 A1**
(43) Date of publication of application: **29.08.2007**
(21) Application number: 07102608.2
(22) Date of filing: 19.02.2007
(51) Int. Cl.: H01J 17/49

(54) **Display filter and display apparatus having the same**

(30) Priority: 22.02.2006 WO PCT/KR2006/017351
(71) Applicant: Samsung Corning Co., Ltd., Kyungki-do 443-732 (KR)
(72) Inventor: Jo, Sung Nim Samsung Corning Co., Ltd., Dongdaemun-gu Seoul 130-756 (KR); Moon, Seung Ho Samsung Corning Co., Ltd., Yeongtong-gu Suwon-si Gyeonggi-do443-810 (KR); Cho, Eun Young Samsung Corning Co., Ltd., Seoul 122-043 (KR); Ahn, Duck Ki Samsung Corning Co., Ltd., Seocho-gu Seoul 137-069 (KR)
(74) Representative: Rupprecht, Kay

(57) **Abstract**

A display filter (200) and a display apparatus including the display filter, which can enhance color purity of light sources of a red color, a green color, and a blue color (RGB), thereby improving color reproducibility are provided. The display filter includes: a filter base (270); and a color correction layer (240) which is formed on a surface of the filter base, and selectively absorbs a wavelength corresponding to about 490 nm to about 510 nm, and about 540 nm to about 600 nm. Here, a color reproduction area of a Commission Internationale de l'Eclairage (CIE) chromaticity coordinate increases to be greater than about 0.01 by the filter base and the color correction layer.

## Description

### CROSS-REFERENCE TO RELATED APPLICATION

This application claims the benefit of Korean Patent Application No. 10-2006-0017351, filed on February 22, 2006, in the Korean Intellectual Property Office, the disclosure of which is incorporated herein by reference.

### BACKGROUND OF THE INVENTION

### 1. Field of the Invention

The present invention relates to a display filter and a display apparatus including the display filter, and more particularly, to a display filter and a display apparatus including the display filter, which can enhance color purity of light sources of a red color, a green color, and a blue color (RGB), thereby improving color reproducibility.

### 2. Description of Related Art

As modern society becomes more information oriented, technology of parts and devices related to image displays is remarkably advancing, and these parts and devices are becoming widespread. Display apparatuses utilizing parts and devices related to photoelectronics are becoming significantly widespread and used for television apparatuses, monitor apparatuses of personal computers, and the like. Also, display apparatuses are becoming both larger and thinner.

Plasma display panel (PDP) apparatuses are generally gaining popularity as next-generation display apparatuses to simultaneously satisfy a trend of becoming larger, and of becoming thinner, when compared with cathode-ray tubes (CRTs) representing existing display apparatuses. The PDP apparatuses display images using a gas discharge phenomenon, and exhibit superior display characteristics such as display resolution, brightness, contrast, an afterimage, a viewing angle, and the like.

The PDP apparatus generates a gas discharge between electrodes by a direct current (DC) voltage or an alternating current (AC) voltage which are supplied to the electrodes. Here, ultraviolet light is generated. Then, a phosphor is exited by ultraviolet light, thereby emitting light.

However, the PDP apparatus has a defect in that an amount of emitted electromagnetic waves and near infrared light with respect to a driving characteristic is great, surface reflectivity of the phosphor is great, and color purity due to orange light emitted from neon (Ne), helium (He), or xenon (Xe) used as a sealing gas is lower than the CRT.

Therefore, the electromagnetic waves and the near infrared light generated in the PDP apparatus may have harmful effects on human bodies, and cause sensitive equipment such as wireless telephones, remote controls, and the like, to malfunction. In order to use the PDP apparatus, it is required to prevent emission of the electromagnetic waves and the near infrared light emitted from the PDP apparatus from increasing to more than a predetermined level. PDP filters having functions such as a shielding function against the electromagnetic waves, a shielding function against the near infrared light, a surface anti-glare function, enhancement of color purity, and the like, are used for shielding against the electromagnetic waves and the near infrared light while simultaneously reducing reflected light, and enhancing color purity.

The PDP apparatus is made of a panel assembly including a discharge cell where a gas discharge phenomenon occurs, and a PDP filter shielding the electromagnetic waves and the near infrared light. Since the PDP filter is equipped in a front unit of the panel assembly, transparency is required to simultaneously emit light and perform shielding functions.

A color correction layer used for a conventional PDP filter in order to enhance color purity enhances color purity of red light by selectively absorbing orange light of a wavelength corresponding to about 580 nm to about 600 nm emitted from internal sealed gas of the PDP apparatus, i.e. helium, neon, argon, or xenon, or determines an external color when the PDP apparatus is not operated. Since the color correction layer selectively absorbs a wavelength range corresponding to about 580 nm to about 600 nm, there is a limit in expressing a color exactly as original colors in a visible spectrum. Specifically, according to a color correction layer of a conventional art, color purity of a red color (R) is enhanced, however, there is a problem that color purity of a green color (G) and a blue color (B) is deteriorated.

Accordingly, when a PDP filter including the color correction layer is used, color reproducibility fully expressing the original colors in a visible spectrum is deteriorated.

Therefore, a display filter and a display apparatus including the display filter, which can enhance color purity of light sources of RGB, thereby improving color reproducibility, are required.

### BRIEF SUMMARY

An aspect of the present invention provides a display filter, which can increase a correction area of a color correction layer, and enhance color purity of light sources of a red color, a green color, and a blue color (RGB), thereby improving color reproducibility.

An aspect of the present invention also provides a display apparatus including a display filter.

Technical solutions of the present invention are not limited to the above technical solutions, and other technical solutions which are not described would be definitely appreciated from a description below by those skilled in the art.

According to an aspect of the present invention, there is provided a display filter including: a filter base; and a color correction layer which is formed on a surface of the filter base, and selectively absorbs a wavelength corresponding to about 490 nm to about 510 nm, and about 540 nm to about 600 nm. A color reproduction area of a Commission Internationale de I'Eclairage (CIE) chromaticity coordinate increases to be greater than about 0.01 by the filter base and the color correction layer.

According to another aspect of the present invention, there is provided a display apparatus including: a panel assembly comprising a transparent front substrate and a rear substrate which are coupled corresponding to each other, and a plurality of cells between the front substrate and the rear substrate; and the display filter disposed corresponding to the front substrate of the panel assembly.

Details of other exemplary embodiments are included in brief description of the drawings.

Advantages and features of the present invention and methods of performing the advantages and features may be apparent with reference to appended drawings and following exemplary embodiments described in detail. However, the present invention is not limited to the exemplary embodiments disclosed below, and may be realized in various forms. The exemplary embodiments are provided to completely disclose the present invention and fully inform those skilled in the art of categories of the invention, and the present invention is defined by the categories of claims. Identical reference numerals refer to identical elements throughout a specification.

The display apparatus used for the present invention can be variously applied to large-size display apparatuses such as PDP apparatuses realizing RGB with lattice-patterned pixels, organic light emitting diode (OLED) apparatuses, liquid crystal display (LCD) apparatuses, field emission display (FED) apparatuses, and the like, small-size mobile display apparatuses such as personal digital assistants (PDAs), display windows of small game devices, display windows of cellular phones, and the like, flexible display apparatuses, and the like. In particular, the display apparatus of the present invention may be efficiently applied to display apparatuses for outdoor applications having a strong external light, and display apparatuses installed indoors of public facilities. The present invention is described by using the PDP apparatus and the PDP filter used for the PDP apparatus for convenience of description, but the present invention is not limited thereto and can be applied to the above various display apparatuses and the display filters used for the display apparatuses.

### BRIEF DESCRIPTION OF THE DRAWINGS

The above and/or other aspects and advantages of the present invention will become apparent and more readily appreciated from the following detailed description, taken in conjunction with the accompanying drawings of which:
FIG. 1 is an exploded perspective view illustrating a plasma display panel (PDP) apparatus according to an exemplary embodiment of the present invention;
FIG. 2 is a sectional view illustrating a PDP filter according to an exemplary embodiment of the present invention;
FIG. 3 is an exploded perspective view illustrating a PDP apparatus according to another exemplary embodiment of the present invention;
FIG. 4A is a graph illustrating a transmittance with respect to wavelength variation of a PDP filter prepared by Experimental example 1;
FIG. 4B is a graph illustrating a transmittance with respect to wavelength variation of a PDP apparatus prepared by Experimental example 1; and
FIG. 4C is a graph illustrating a transmittance with respect to wavelength variation of a PDP filter prepared by Comparative experimental example 1;

### DETAILED DESCRIPTION OF EMBODIMENTS

Reference will now be made in detail to exemplary embodiments of the present invention, examples of which are illustrated in the accompanying drawings, wherein like reference numerals refer to the like elements throughout. The exemplary embodiments are described below in order to explain the present invention by referring to the figures.

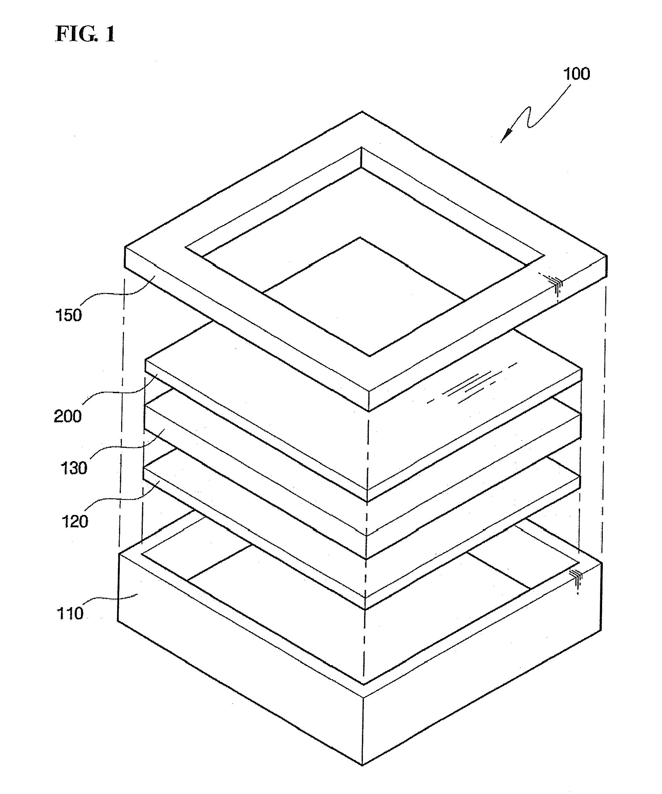

FIG. 1 is an exploded perspective view illustrating a plasma display panel (PDP) apparatus according to an exemplary embodiment of the present invention. A structure of the PDP apparatus 100 according to the exemplary embodiment of the present invention includes a case 110, a cover 150 covering an upper part of the case 110, a driving circuit board 120 received in the case 110, a panel assembly 130 including a discharge cell where a gas discharge phenomenon occurs, and a PDP filter 200, as illustrated in FIG. 1. The PDP filter 200 includes a conductive layer made of a material with high conductivity on a transparent substrate, and the conductive layer is earthed to the case 110 via the cover 150. Specifically, the electromagnetic waves generated from the panel assembly 130 are shielded by the cover 150 and the case 110 which are earthed using the conductive layer of the PDP filter 200, before reaching a viewer.

Hereinafter, the PDP filter 200 shielding the electromagnetic waves, the near infrared light, and the like is first described, and the PDP apparatus 100 including the PDP filter 200 and the panel assembly 130 is then described.

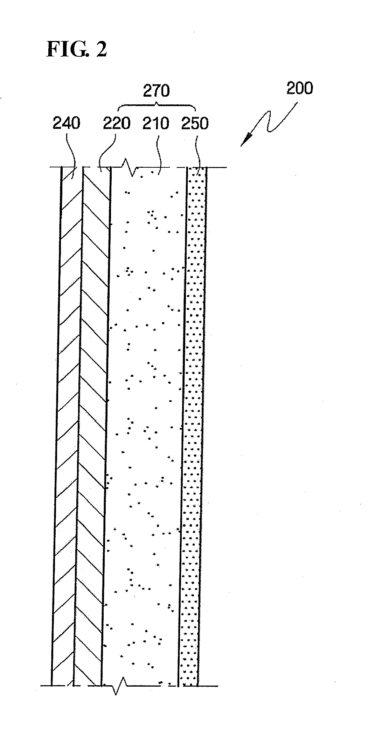

FIG. 2 is a sectional view illustrating a PDP filter according to an exemplary embodiment of the present invention. As illustrated in FIG. 2, the PDP filter 200 according to the present exemplary embodiment includes a filter base 270 and a color correction layer 240. The filter base 270 includes a transparent substrate 210, and layers having various shielding functions, and the like are disposed on the transparent substrate 210.

Here, the filter base 270 is formed by stacking the transparent substrate 210, an antireflective layer 250, or a shielding layer against electromagnetic waves 220 regardless of order. Hereinafter, layers corresponding to an electromagnetic shielding function and an antireflection function are described as separate layers in the present exemplary embodiment, but the present invention is not limited thereto. Specifically, the filter base 270 according to the present exemplary embodiment may be configured of at least one layer, and each layer may have the electromagnetic shielding function, the antireflection function, or a combination thereof. Also, the filter base 270 may altogether have the above electromagnetic shielding function, the above antireflection function, or a combination thereof, and have any one of the electromagnetic shielding function, the antireflection function, or a combination thereof.

For example, the filter base 270 according to the present exemplary embodiment has a structure where the shielding layer against electromagnetic waves 220 formed on a surface of the transparent substrate 210, and the antireflective layer 250 formed on another surface of the transparent substrate 210 are stacked, as illustrated in FIG. 2.

Here, the transparent substrate 210 is generally produced using a tempered glass or a semi-tempered glass which is about 2.0 mm to about 3.5 mm thick, or a transparent plastic material such as acrylic. Glass has a drawback that it is difficult to produce a lightweight filter due to specific gravity corresponding to about 2.6 when producing a filter, and the gross weight of an entire set increases due to an increasing thickness of the glass when installing in a plasma display panel set. However, glass significantly enhances safety against destruction. Also, the transparent substrate 210 may be excluded depending on a type of the filter base 270.

In the present exemplary embodiment, the transparent substrate 210 may include an inorganic compound such as glass, quartz, and the like, and transparent organic polymers.

Acrylic or polycarbonate is generally used for the transparent substrate 210 formed by the member of the organic polymer, however, the present invention is not limited to the above exemplary embodiments. It is desirable that the transparent substrate 210 has great transparency and thermal resistance. Also, the transparent substrate 210 may include a polymeric articles or stacked body of the polymeric articles. It is desirable that a transmittance with respect to visible light is greater than about 80% concerning transparency of the transparent substrate 210, and transition temperature with respect to glass is higher than about 50□ concerning thermal resistance. It is required that the polymer used for the transparent substrate 210 is transparent in a visible wavelength range. Also, there are polyethylene terephthalate (PET), polysulfone (PS), polyether sulfone (PES), polystyrene, polyethylene naphtalate, polyarylate, polyether ether ketone (PEEK), polycarbonate (PC), polypropylene (PP), polyimide, triacetylcellulose (TAC), polymethylmethacrylate (PMMA), and the like as a specific example of the polymer used for the transparent 210, however, the polymer used for the transparent 210 is not limited thereto. The transparent substrate 210 preferably includes PET in aspects of price, thermal resistance, and transparency.

Also, it is required to cover a display surface with a highly conductive material to shield the electromagnetic waves. A multi-layered transparent conductive film stacking a conductive mesh film, a metal thin film, and a transparent thin film having a high refractive index may be used for the shielding layer against electromagnetic waves 220 according to the present exemplary embodiment. In the present exemplary embodiment, the shielding layer against electromagnetic waves 220 is formed on the surface of the transparent substrate 210, i.e. a surface towards the panel assembly, but the present invention is not limited to the above disposition.

Here, an earthed metal mesh, a synthetic resin, or a mesh of a metal fiber covered with a metal may be generally used for the conductive mesh film. A metal having processibility and high electric conductivity, for example, copper, chrome, nickel, silver, molybdenum, tungsten, aluminum, and the like, may be used for the metal configuring the conductive mesh film. Copper and nickel from the above metals is desirable in aspects of price, electric conductivity and processibility. As methods of forming a conductive mesh, there is a method of forming patterns by laminating a metal thin film and using a photoetching method, and there is a method of forming patterns via plating. It is desirable that a metal layer forming the conductive mesh is about 1 µm to about 20 µm thick. Also, it is more desirable that the metal layer forming the conductive mesh is about 3 µm to about 10 µm thick. An electromagnetic shielding effect may be reduced in the case of a metal layer thinner than about 1 µm, and a period of time of production may be increased in the case of a metal layer thicker than about 20 µm. Generally, surface resistance of the base substrate where the metal mesh is formed is less than about 0.5Ω/□.

Also, for a transparent thin film having a high refractive index, as a representative example, indium tin oxide (ITO) may be used for the electromagnetic shielding effect as the multi-layered transparent conductive film. There are a multi-layered thin film alternately stacking the metal thin film such as gold, silver, copper, platinum, and palladium, and the transparent thin film having the high refractive index such as indium oxide, stannic oxide, and zinc oxide, and the like as the multi-layered transparent conductive film. The metal thin film of the multi-layered transparent conductive film may have a high conductivity, and an effect of shielding the near infrared light is great by a metal using reflection and absorption extending over a wide wavelength range. However, the transmittance with respect to visible light is relatively low. Also, a transparent thin film having the high refractive index of the multi-layered transparent conductive film has a relatively low conductivity or a relatively low reflection effect of the near infrared light. However, a transparent thin film having the high refractive index of the multi-layered transparent conductive film has a great transparency. Therefore, the multi-layered transparent conductive film stacking the metal thin film and the transparent thin film having the high refractive index has a characteristic that the conductivity, the effect of shielding the near infrared light, and the transmittance with respect to visible light are great by combining advantages of the metal thin film and the transparent thin film having the high refractive index.

Here, electromagnetic waves are shielded by an effect of reflection and absorption of electromagnetic waves. In order to absorb electromagnetic waves, a conductive metal thin film is required in the shielding layer against electromagnetic waves 220. Also, it is required that the conductive metal thin film is thicker than a predetermined value in order to completely absorb electromagnetic waves generated from the display apparatus. However, the thicker the conductive metal thin film is, the lower the transmittance with respect to visible light is. Also, the multi-layered transparent conductive film alternately stacking the metal thin film and the transparent thin film having the high refractive index may increase a reflective surface and reflection of electromagnetic waves.

The metal thin film is a thin film layer formed with silver, or an alloy including silver. Since silver and the alloy including silver has high conductivity, high reflectivity with respect to infrared light, and high transmittance with respect to visible light when stacking multi-layers, it is desirable that silver is used. However, since silver has low chemical and physical stability, and is deteriorated by pollutants of a surrounding environment, vapor, heat, light, and the like, the alloy including silver and at least one other metal which is stable with respect to the surrounding environment such as gold, platinum, palladium, copper, indium, tin, and the like, may be also used. Generally, since high conductivity and high optical characteristic of silver are deteriorated when adding silver to another metal, it is desirable that the metal thin film simply formed by silver is used for at least one layer from a plurality of metal thin films forming the multi-layered transparent conductive film. When all metal thin films are formed by silver and not an alloy, the shielding layer against electromagnetic waves 220 having high conductivity and high optical characteristic may be obtained, however, the shielding layer against electromagnetic waves 220 tends to be easily deteriorated by influences of the surrounding environment. Any one of conventional well-known methods such as sputtering, ion plating, vacuum deposition, plating, and the like may be used for forming the metal thin film.

Also, the transparent thin film having the high refractive index has transparency with respect to visible light, and has an effect of preventing the visible light from being reflected by the metal thin film due to a refractive index difference from the metal thin film. Specific materials forming the transparent thin film having the high refractive index are an oxide such as indium, titanium, zirconium, bismuth, tin, zinc, antimony, tantalum, cerium, neodymium, lanthanum, thorium, magnesium, potassium, and the like, combinations thereof, zinc sulfide, and the like. Although the oxide or a sulfide has a difference in stoichiometric formation with a metal, oxygen, and sulfur, it is irrelevant in a range by slightly modifying the optical characteristic. Since indium oxide or a combination of indium oxide and tin oxide (ITO) from the oxide and the sulfide has high transparency, a high refractive index, a high growth rate of a film, and a characteristic of adhering closely to the metal thin film, it is desirable that indium oxide or ITO is used. Also, absorptiveness of electromagnetic waves, and conductivity of the shielding layer against electromagnetic waves 220 may be increased using a thin film of an oxide semiconductor having a relatively high conductivity such as ITO. Any one of conventional well-known methods such as sputtering, ion plating, ion beam assist, vacuum deposition, wet coating, and the like may be used for forming the transparent thin film having the high refractive index.

The sputtering from the various methods of growing a film may have an advantage of controlling thickness of the film and stacking the multi-layers, and continuously grow the film by simply repeatedly growing the metal thin film and the transparent thin film having the high refractive index. In the present exemplary embodiments, the transparent thin film having the high refractive index is generally formed by indium oxide, and the metal thin film is formed by silver or an alloy including silver, and the respective thin films are continuously grown by a sputtering method. Reactive sputtering using a metal target including indium as a main component, or sintered body target including indium oxide as the main component may be performed when forming the transparent thin film having the high refractive index generally formed by indium oxide. Sputtering targeting silver or the alloy including silver may be performed when forming the metal thin film formed by silver or the alloy including silver.

Although it is not illustrated, the filter base 270 according to the present exemplary embodiment may separately include a shielding layer against near infrared light. The shielding layer against near infrared light is generated from the panel assembly, and shields the strong near infrared light causing electronic devices such as wireless phones, remote controls, and the like, to malfunction.

There is an effect that the multi-layered transparent conductive film shields the near infrared light, when the multi-layered transparent conductive film stacking the metal thin film and the transparent thin film having a high refractive index is used for the shielding layer against electromagnetic waves 220 according to the present exemplary embodiment. Accordingly, two functions of shielding the near infrared light and of shielding the electromagnetic waves may be simply performed with the shielding layer against electromagnetic waves 220 without separately forming the shielding layer against near infrared light. Also, the shielding layer against near infrared light described below may be separately formed in this case.

When the conductive mesh film is used for the shielding layer against electromagnetic waves 220 in the present exemplary embodiment, a polymeric resin, including a colorant absorbing the near infrared light which absorbs a wavelength of a near infrared light range, is used to shield the near infrared light emitted from the panel assembly. For example, an organic dye of various materials such as cyanine, anthraquinone, naphthoquinone, phthalocyanine, naphthalocyanine, dimonium, nickeldithiol, and the like, may be used for the colorant absorbing the near infrared light. Since the PDP apparatus emits the strong near infrared light extending over a wide wavelength range, the shielding layer against near infrared light absorbing the near infrared light extending over the wide wavelength range may be used.

The antireflection layer 250 according to the present exemplary embodiment is formed on the other surface of the transparent substrate 210, but the present invention is not limited to the above built-up sequence. As illustrated in FIG. 2, it is efficient that the antireflection layer 250 is formed in a surface corresponding to a viewer position when the PDP filter 200 is installed in the PDP apparatus, i.e. the opposite surface of the panel assembly. The antireflection layer 250 may enhance visibility by reducing reflection of an external light.

Also, external light reflection of the PDP filter 200 may be further reduced by forming the antireflective layer 250 on a surface in the direction of the panel assembly from main surfaces of the PDP filter 200. Also, the transmittance with respect to visible light from the panel assembly and a contrast ratio may be increased by forming the antireflective layer 250 and reducing external light reflection of the PDP filter 200. A film having an antireflection function may be formed in a base substrate by coating, printing, or various conventional well-known methods of forming a film in order to form the antireflective layer 250. Also, a transparent member where the film having the antireflection function is formed, or a transparent member having the antireflection function may be formed by being attached interposing any transparent gluing agent or adhesive.

Specifically, a refractive index less than about 1.5 in the visible spectrum may be used for the antireflective layer 250. Also, it is desirable that a fluorine-based transparent polymeric resin, a magnesium fluoride-based resin, a silicon-based resin, a thin film of silicon oxide, and the like, having a refractive index of less than about 1.4, for example, a single layer formed by thickness of an optical film corresponding to a 1 /4 wavelength, may be used for the antireflective layer 250. Also, a multi-layer stacking at least two layers of thin films of an inorganic compound such as metal oxide, fluoride, silicide, boride, carbide, nitride, sulfide, and the like, or an organic compound such as a silicon-based resin, an acrylic resin, a fluorine-based resin, and the like having different refractive indexes may be used for the antireflective layer 250.

Here, the PDP filter may be simply produced in the case of forming the antireflective layer 250 as a single layer, however, the antireflective layer 250 formed as the single layer has an antireflection effect less than the antireflective layer 250 formed as the multi-layer. The multi-layered antireflective layer has the antireflection effect extending over a wide wavelength range. The thin film of the inorganic compound may be formed by the conventional well-known methods such as sputtering, ion plating, ion beam assist, vacuum deposition, wet coating, and the like, and the thin film of the organic compound may be formed by the conventional well-known methods such as wet coating, and the like.

For example, the antireflective layer 250 according to the present exemplary embodiment may use a structure alternately stacking an oxide film having a low refractive index such as silicon dioxide (SiO₂), or an oxide film having a high refractive index such as titanium dioxide (TiO₂) or niobium pentoxide (Nb₂O₅). The oxide films may be formed using a physical vacuum deposition, or wet coating.

The PDP filter 200 according to the present exemplary embodiment includes the color correction layer 240 selectively absorbing wavelengths corresponding to about 490 nm to about 510 nm, about 540 mn to about 580 nm, and about 580 nm to about 600 nm. The color correction layer 240 modifies or corrects color balance by reducing or controlling an amount of a red color (R), a green color (G), and a blue color (B).

Red visible light generated from plasma in the panel assembly is generally shown as an orange color. The color correction layer 240 may respectively enhance color purity of G and B by selectively absorbing visible light of a wavelength range corresponding to about 490 nm to about 510 nm, and about 540 nm to about 580 nm.

It is desirable that the transmittance of the maximally absorbed wavelength is less than about 20% in the wavelength range corresponding to about 580 nm to about 600 nm of the color correction layer 240 in order to enhance color purity of R similar to a national television system committee (NTSC) standard. Also, it is desirable that the transmittance of the maximally absorbed wavelength is less than about 40% in the wavelength range corresponding to about 490 nm to about 510 nm of the color correction layer 240 in order to enhance color purity of G and B. Also, it is desirable that the transmittance of the maximally absorbed wavelength is less than about 50% in the wavelength range corresponding to about 540 nm to about 570 nm of the color correction layer 240 in order to enhance color purity of G.

Since the PDP filter 200 including the color correction layer 240 may simply have a high absorption rate in a specific wavelength range, and maintain a high transmittance in other wavelength ranges excluding the specific wavelength range, an entire transmittance with respect to visible light of the PDP filter 200 may be maintained to be greater than about 40%. In particular, in the case of the PDP filter 200 using the shielding layer against electromagnetic waves 220 formed of the conductive mesh film, and including the shielding layer against near infrared light, the entire transmittance with respect to visible light of the PDP filter 200 may be maintained to be about 40% to about 70%. Also, in the case of the PDP filter 200 using the shielding layer against electromagnetic waves 220 formed of the multi-layered transparent conductive film stacking the metal thin film and the transparent thin film having the high refractive index, and excluding the shielding layer against near infrared light, the entire transmittance with respect to visible light of the PDP filter 200 may be maintained to be about 40% to about 80%.

The color correction layer 240 includes a color correction colorant, a polymeric resin, and an organic solvent. The color correction layer 240 may further include the above colorant absorbing near infrared light according to circumstances. The color correction layer 240 including the colorant absorbing near infrared light has an average light transmittance less than about 10% in the wavelength range corresponding to about 800 nm to about 1000 nin.

Here, at least one thermosetting resin selected from the group consisting of acrylic, urethane, carbonate, epoxy, PET, PMMA, and the like, and a gluing agent may be used for the polymeric resin included in the color correction layer 240.

Also, at least one selected from the group consisting of methylethylketone (MEK), toluene, butyl acetate, methanol, ethanol, xylene, acetone, and the like may be used for the organic solvent. Also, the present invention is not limited thereto, and since the polymeric resin or the organic solvent is selected considering solubility, reactivity, and the like, of the color correction colorant, the polymeric resin or the organic solvent is not limited to a specific material.

Types of colorants such as anthraquinone, cyanine, azo, stryl, phthalocyanine, methane, combinations thereof, and the like, may be used for the color correction colorant used for the color correction layer 240. Also, an organic colorant disclosed in Korean Patent Laid-open Gazette 2001-26838 and 2001-39727 may be used, and the above patents are cited and unified in the present specification. Also, an octaphenyl-tetraazaporphyrin, or a tetraazaporphyrin derivative may be used. The tetraazaporphyrin derivative is a derivative where a metal (M) atom exists in a tetraazaporphyin ring as a main group, and one ligand selected from the group consisting of ammonia, water, and halogen has a coordinate covalent bond with the above metal atom. The metal is at least one selected from the group consisting of zinc (Zn), palladium (Pd), magnesium (Mg), manganese (Mn), cobalt (Co), copper (Cu), ruthenium (Ru), rhodium (Rh), iron (Fe), nickel (Ni), vanadium (V), tin (Sn), and titanium (Ti). However, the present invention is not limited to the types of the above organic colorant, and types and concentrations of the colorants are variously selected and used by absorption wavelength of the colorants, absorption coefficients, and transmittance characteristics required for displays.

Color purity may be enhanced using the PDP filter 200. Specifically, it is desirable that a color reproduction area of a Commission Internationale de I'Eclairage (CIE) chromaticity coordinate when using the PDP filter 200 increases to be greater than about 0.01 compared with the color reproduction area when excluding the PDP filter 200. Specifically, when variable amounts of the CIE chromaticity coordinate are compared, a variable amount corresponds to about Δx ≥ 0.010 and Δy ≤ -0.015 in the case of red. A variable amount corresponds to about Δx ≤ -0.020 and Δy ≥ 0.020 in the case of green, and a variable amount corresponds to about Δx ≤ 0.005 and Δy ≤ -0.005 in the case of blue. Therefore, the entire color reproduction area may be increased.

When each layer or each film of the PDP filter 200 is stuck together, a transparent gluing agent or adhesive may be used. As a specific material, there are an acrylic adhesive, a silicon adhesive, an urethane adhesive, a polyvinyl butyral adhesive (PMB), an ethylene-vinyl acetate adhesive (EVA), a polyvinyl ether, a saturated amorphous polyester, a melamine resin, and the like.

The PDP filter 200 according to the present exemplary embodiment is described above. Hereinafter, a PDP apparatus using the PDP filter 200 is described.

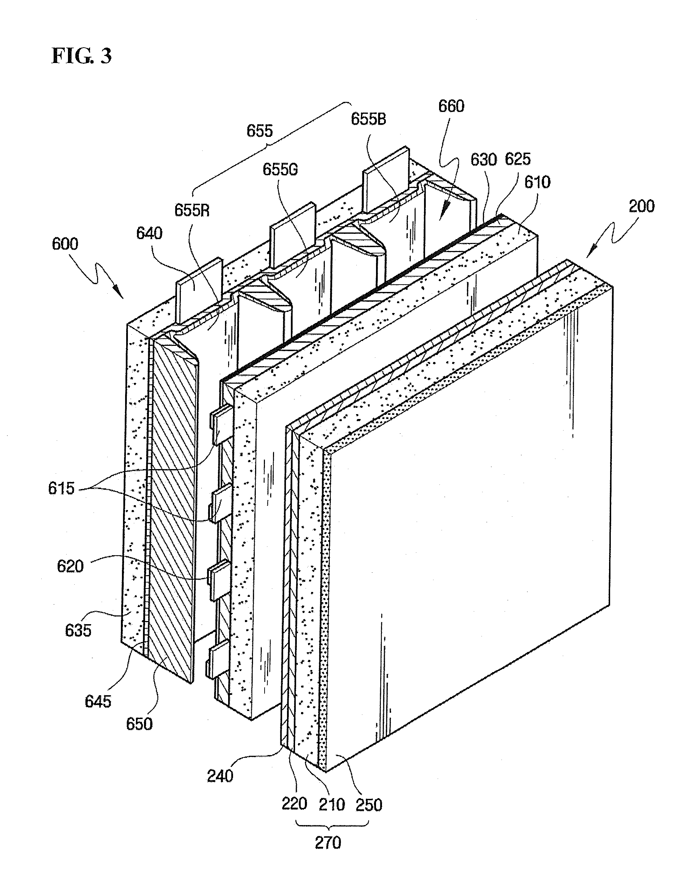

FIG. 3 is an exploded perspective view illustrating a PDP apparatus according to another exemplary embodiment of the present invention.

As illustrated in FIG. 3, the PDP apparatus according to the present exemplary embodiment includes a PDP filter 200 and a panel assembly 600. The PDP filter 200 is similar to the above described PDP filter, and hereinafter, the panel assembly is described in detail.

As illustrated in FIG. 3, a plurality of sustain electrodes 615 is disposed on a surface of a front substrate 610 in the form of stripes. A bus electrode 620 is formed in each sustain electrode 615 to reduce signal delay. A dielectric layer 625 is formed to cover the entire surface where the sustain electrode 615 is disposed. Also, a dielectric shielding film 630 is formed on the surface of the dielectric layer 625. As an example, the dielectric shielding film 630 in the present exemplary embodiment may be formed by covering the surface of the dielectric layer 625 with a thin film of magnesium oxide (MgO) using a sputtering method, and the like.

Also, a plurality of address electrodes 640 is disposed in the form of stripes on a surface of a rear substrate 635 corresponding to a front substrate 610. Disposition direction of the address electrode 640 is substantially in a perpendicular direction to the sustain electrode 615 when the front substrate 610 and the rear substrate 635 are disposed corresponding to each other. The dielectric layer 645 is formed to cover the entire surface where the address electrode 640 is disposed. Also, a plurality of partition walls 650 facing the front substrate 610 in parallel with the address electrode 640 is installed protruding on the surface of the dielectric layer 645. The partition wall 650 is disposed in a range between two adjacent address electrodes 640.

A phosphor layer 655 is disposed on a lateral surface in a groove formed between two adjacent partition walls 650, and the dielectric layer 645. In the phosphor layer 655, a red phosphor layer 655R, a green phosphor layer 655G, and a blue phosphor layer 655B are disposed in each groove divided by the partition walls 650. The phosphor layer 655 is a layer formed of a phosphor particle group generated by using a method of generating a thick film such as a screen printing method, an ink-jet method, a photoresist film method, and the like. For example, as material used for the phosphor layer 655, (Y, Gd)BO3:Eu may be used for a red phosphor, Zn2SiO4:Mn may be used for a green phosphor, and BaMgAl10O17:Eu may be used for a blue phosphor.

When the front substrate 610 and the rear substrate 635 having the above structure are disposed corresponding to each other, discharge gas is sealed in a discharge cell 660 generated with the groove and the dielectric shielding film 630. Specifically, the discharge cell 660 is generated in each portion where the sustain electrode 615 between the front substrate 610 and the rear substrate 635, and the address electrode 640 cross in the panel assembly 600. For example, neon-xenon (Ne-Xe) gas, helium-xenon (He-Xe) gas, and the like may be used for the discharge gas.

The panel assembly 600 having the above structure basically has a function of emitting light similar to a fluorescent lamp, and the ultraviolet light emitted from the discharge gas according to internal discharge of the discharge cell 660 is converted into the visible light by exciting the phosphor layer 655 and emitting light.

Also, a phosphor material capable of conversing into each different visible light is used for the phosphor layer of each color (655R, 655G, and 655B) used for the panel assembly 600. Accordingly, when the image is displayed in the panel assembly 600, color balance is generally controlled by controlling brightness of each phosphor layer (655R, 655G, and 655B). Specifically, brightness of other phosphor layers is reduced at a ratio predetermined for each color, based on the phosphor layer of the lowest color in brightness.

A driving method for the panel assembly 600 is generally divided into a driving method for address discharge and a driving method for sustain discharge. The address discharge occurs between the address electrode 640 and one sustain electrode 615, and wall charge is generated in this instance. The sustain discharge occurs due to a potential difference between two sustain electrodes 615 located in the discharge cell 660 where the wall charge is generated. The phosphor layer 655 of the corresponding discharge cell 660 is excited by the ultraviolet light generated from the discharge gas in the case of sustain discharge, and the visible light is emitted. Also, the visible light is exited via the front substrate 610, and generates the image that the viewer may recognize.

Hereinafter, a function of die color correction layer used for the PDP filter according to the present invention is described in detail by an experimental example and a comparative experimental example. However, the following experimental examples are merely intended to illustrate the present invention, and the present invention is not limited to the following experimental examples. Also, since contents which are not illustrated here would be technically appreciated by those skilled in the art, a more specific description is omitted.

### [Experimental example 1]

A PDP apparatus including a PDP filter similar to the above PDP filter described with reference to FIG. 3 was prepared. Here, the PDP filter is formed by coating a color correction layer on a surface of a filter base after preparing the filter base having a multi-layered structure of a transparent substrate, a shielding layer against electromagnetic waves, and an antireflective layer. The transparent substrate is formed of a semi-tempered glass, and the shielding layer against electromagnetic waves is formed of a conductive mesh film formed on a surface of die transparent substrate. Also, the antireflective layer is formed on another surface of the transparent substrate.

Here, the color correction layer is formed by a method described below. After mixing a color correction colorant with a solid PMMA polymeric resin, the mixture of the color correction colorant and the solid PMMA polymeric resin are stirred for more than one hour using an MEK organic solvent. Here, a polymethine-based colorant where a maximal absorption wavelength corresponds to about 590 nm, and a cyanine-based colorant where the maximal absorption wavelength corresponds to about 560 nm and about 500 nm are used for the color correction colorant. Also, the color correction colorant is mixed by a magnification corresponding to about 0.1% to about 5% by weight, compared with the polymeric resin. Next, the color correction colorant is coated by a thickness corresponding to about 5 µm using a bar in a PET film. Including the color correction colorant, a phthalocyanine colorant having a maximal absorption wavelength of the wavelength range corresponding to about 800 nm to about 900 nm as a colorant absorbing near infrared light, and a dimonium-based colorant having a maximal absorption wavelength corresponding to about 1080 nm are added.

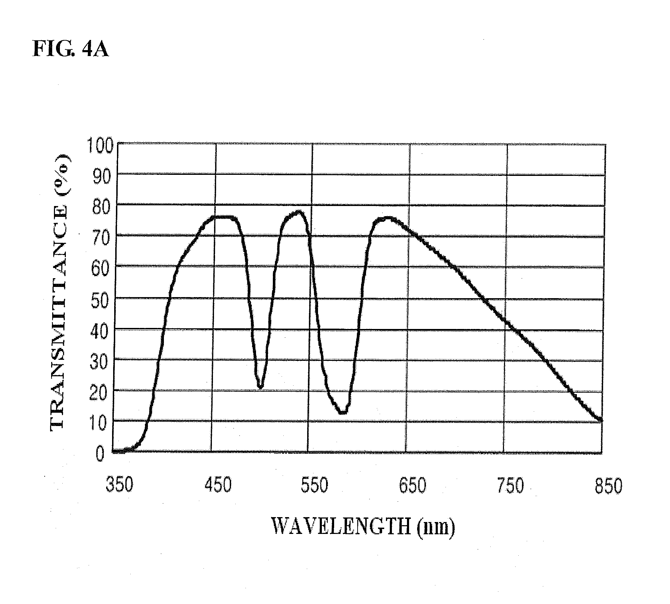

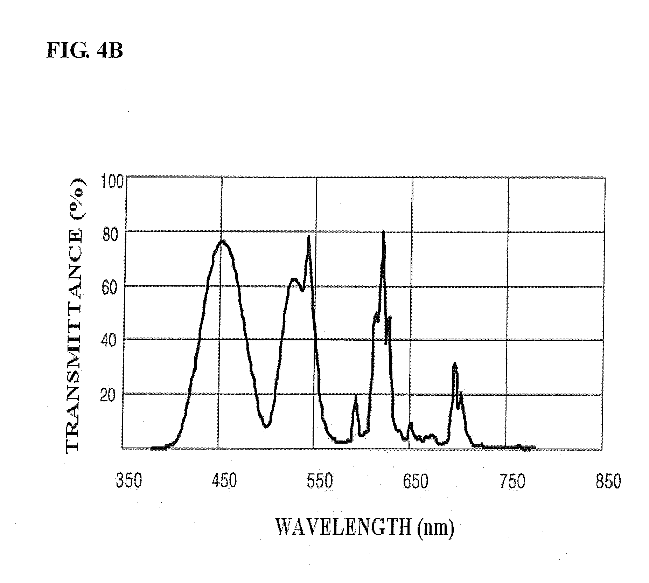

A graph of FIG. 4A may be obtained by measuring the transmittance with respect to wavelength variation using the PDP filter. Also, a graph of FIG. 4B may be obtained measuring the transmittance with respect to wavelength variation using the PDP apparatus including the PDP filter. Here, FIG. 4A is the graph illustrating the transmittance with respect to wavelength variation of the PDP filter prepared by Experimental example 1, and FIG. 4B is the graph illustrating the transmittance with respect to wavelength variation of the PDP apparatus prepared by Experimental example 1.

### [Comparative experimental example 1]

Excluding the color correction colorant included in the color correction layer, a PDP apparatus including PDP filter substantially similar to Experimental example 1 was prepared. The polymethine-based colorant where a maximal absorption wavelength corresponds to about 590 nm is simply used for the color correction colorant used for Comparative experimental example 1.

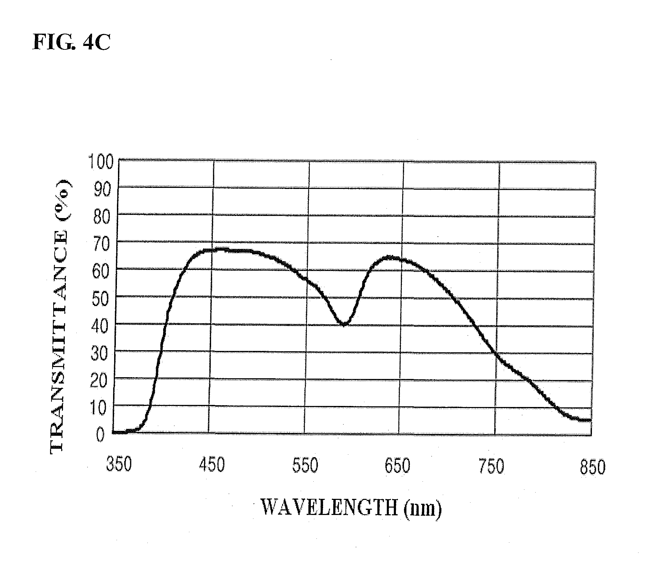

A graph of FIG. 4C may be obtained measuring the transmittance with respect to wavelength variation using the PDP filter. Here, the graph of FIG. 4C illustrates the transmittance with respect to wavelength variation of the PDP filter prepared by Comparative experimental example 1.

### [Comparative experimental example 2]

A PDP apparatus excluding the PDP filter was prepared.

Similar to Table 1 below, the CIE chromaticity is measured using the PDP filters obtained by Experimental example 1, Comparative experimental example 1 and 2. Also, the NTSC standard is established as a standard with respect to the CIE chromaticity.

**[Table 1]**

| | R CIE (x, y) | G CIE (x, y) | B CIE (x, y) | Color reproduction area |
|---|---|---|---|---|
| NTSC standard | (0.670, 0.330) | (0.210, 0.710) | (0.140, 0.080) | 0.1582 |
| Experimental example 1 | (0.670, 0.319) | (0.236, 0.713) | (0.151, 0.059) | 0.1587 |
| Comparative experimental example 1 | (0.655, 0.335) | (0.251, 0.687) | (0.150, 0.071) | 0.1424 |
| Comparative experimental example 2 | (0.646, 0.343) | (0.261, 0.679) | (0.150, 0.068) | 0.1363 |

As illustrated in Table 1, the PDP apparatus of Experimental example 1 may obtain the color reproduction area which is greater than the NTSC standard, and the color reproduction area of the PDP apparatus of Experimental example 1 increases to be greater than about 0.01, compared with the PDP apparatuses of Comparative experimental example 1 and 2. Specifically, the color reproduction area of the PDP apparatus of Experimental example 1 respectively increases to be about 0.0163 and 0.0224 compared with the PDP apparatus of Comparative experimental example 1 and 2. Specifically, it is obvious to those of ordinary skill in the art that color purity of the PDP filter of Experimental example 1 is significantly increased when obtaining the color reproduction area greater than or equal to the NTSC standard. Also, compared with Comparative experimental example 2 excluding the PDP filter, the color reproduction area increases to be about 16.4%. Also, compared with Comparative experimental example 1 simply using the polymethine-based colorant where a maximal absorption wavelength corresponds to about 590 nm, the color reproduction area increases to be about 11.4%.

Specifically, it is obvious to those of ordinary skill in the art that the color reproduction area increases by having variations described below when examining variation of the CIE chromaticity coordinate of Experimental example 1 with respect to Comparative experimental example 2. A variable amount of the CIE chromaticity coordinate corresponds to about Δx = 0.024 (≥ 0.010) and Δy = -0.024 (≤ -0.015) in the case of R. Also, a variable amount of the CIE chromaticity coordinate corresponds to about Δx = - 0.025 (≤ -0.020) and Δy = 0.034 (≥ 0.020) in the case of G. Also, a variable amount of the CIE chromaticity coordinate by the display filter corresponds to about Δx = 0.001 (≤ 0.005) and Δy = -0.009 (≤ -0.005) in the case of B.

It is obvious to those of ordinary skill in the art that color purity of the PDP apparatus including the PDP filter according to the present exemplary embodiment increases by measuring variation of the color reproduction area via the CIE chromaticity coordinate.

Also, as illustrated in FIGS. 4A through 4C, it is obvious to those of ordinary skill in the art that color purity is enhanced by selectively absorbing wavelengths corresponding to about 490 nm to about 510 nm, about 540 nm to about 580 nm, and about 580 nm to about 600 nm in Experimental example 1, compared with Comparative experimental example 1.

According to the exemplary embodiments of the preset invention, there is provided a display filter and a display apparatus including the display filter, which can increase a correction area of a color correction layer, enhance color purity of light sources of RGB, thereby improving color reproducibility.

Although a few exemplary embodiments of the present invention have been shown and described, the present invention is not limited to the described exemplary embodiments. Instead, it would be appreciated by those skilled in the art that changes may be made to these exemplary embodiments without departing from the principles and spirit of the invention, the scope of which is defined by the claims and their equivalents.

## Claims

1. A display filter comprising:
a filter base; and
a color correction layer which is formed on a surface of the filter base, and selectively absorbs a wavelength corresponding to about 490 nm to about 510 nin, and about 540 nm to about 600 nin,
wherein a color reproduction area of a Commission Internationale de I'Eclairage (CIE) chromaticity coordinate increases to be greater than about 0.01 by the filter base and the color correction layer.

2. The display filter of claim 1, wherein a variable amount of the CIE chromaticity coordinate by the display filter corresponds to about Δx ≥ 0.010 and Δy ≤ -0.015 in the case of a red color (R).

3. The display filter of claim 1, wherein a variable amount of the CIE chromaticity coordinate by the display filter corresponds to about Δx ≤ -0.020 and Δy ≥ 0.020 in the case of a green color (G).

4. The display filter of claim 1, wherein a variable amount of the CIE chromaticity coordinate by the display filter corresponds to about Δx ≤ 0.005 and Δy ≤ -0.005 in the case of a blue color (B).

5. The display filter of claim 1, wherein the display filter has a color reproduction area greater than a national television system committee (NTSC) standard.

6. The display filter of claim 1, wherein the display filter has a transmittance greater than about 40% in a visible spectrum.

7. The display filter of claim 1, wherein the filter base has a multi-layered structure of an antireflective layer, and a shielding layer against electromagnetic waves on a transparent substrate.

8. The display filter of claim 7, wherein the shielding layer against electromagnetic waves is made of a conductive mesh film,
the filter base further comprises a shielding layer against near infrared light, and
the display filter has a transmittance in a visible spectrum corresponding to about 40% to about 70%.

9. The display filter of claim 7, wherein the shielding layer against electromagnetic waves is made of a multi-layered transparent conductive film stacking a metal thin film and a transparent thin film having a high refractive index, and
the display filter has a transmittance in a visible spectrum corresponding to about 40% to about 80%.

10. The display filter of claim 1, wherein the color correction layer is formed by mixing a solid polymeric resin including a color correction colorant, and an organic solvent.

11. The display filter of claim 10, wherein the organic solvent is at least one selected from the group consisting of methylethylketone (MEK), toluene, butyl acetate, methanol, ethanol, xylene, and acetone.

12. The display filter of claim 10, wherein the polymeric resin is at least one thermosetting resin selected from the group consisting of acrylic, urethane, carbonate, epoxy, polyethylene terephthalate (PET), and a polymethylmethacrylate (PMMA), and a gluing agent.

13. The display filter of claim 10, wherein the color correction colorant is at least one selected from the group consisting of anthraquinone, cyanine, azo, styryl, phthalocyanine, methine, combinations thereof, an octaphenyl-tetraazaporphyrin, and a tetraazaporphyrin derivative.

14. The display filter of claim 10, wherein the color correction colorant has a concentration of about 0.1% to about 5% by weight, compared with the polymeric resin.

15. The display filter of claim 10, wherein the color correction layer further comprises a colorant absorbing near infrared light, and
the color correction layer has an average light transmittance less than about 10% in a wavelength range corresponding to about 800 nm to about 1000 nm.

16. A display apparatus comprising:
a panel assembly comprising a transparent front substrate and a rear substrate which are coupled corresponding to each other, and a plurality of cells between the front substrate and the rear substrate; and
the display filter of any one of claims 1 through 15 disposed corresponding to the front substrate of the panel assembly.
